# EUROPÄISCHE PATENTSCHRIFT

(11) **EP 3 602 183 B1**
(45) Veröffentlichungstag und Bekanntmachung des Hinweises auf die Patenterteilung: **01.02.2023**
(21) Anmeldenummer: 18713142.0
(22) Anmeldetag: 13.03.2018
(51) Int. Cl.: G02C 5/14, G02C 5/22

(54) **BRILLE**
SPECTACLES
LUNETTES

(30) Priorität: 20.03.2017 DE 102017204612
(43) Veröffentlichungstag der Anmeldung: 05.02.2020
(73) Patentinhaber: Uvex Arbeitsschutz GmbH, 90766 Fürth (DE)
(72) Erfinder: KÜHNLEIN, Florian, 90763 Fürth (DE); ANGEBRANDT, Helena, 91207 Lauf (DE); WIEGLER, Markus, 90409 Nürnberg (DE); JASCHKE, Simon, 90766 Fürth (DE); KREITSCHMANN, Tobias, 90522 Oberasbach (DE)
(74) Vertreter: Rau, Schneck & Hübner Patentanwälte Rechtsanwälte PartGmbB
(86) Internationale Anmeldenummer: PCT/EP2018/056228
(87) Internationale Veröffentlichungsnummer: WO 2018/172139

(56) Entgegenhaltungen:
- DE-C1- 4 421 309
- KR-A- 20120 024 327
- US-A- 3 594 073
- US-A1- 2010 321 629
- US-A1- 2011 109 872
- US-A1- 2016 223 833
- US-A1- 2016 299 352

## Beschreibung

Die Erfindung betrifft eine Brille, insbesondere Arbeitsschutzbrille, gemäß dem Oberbegriff des Anspruchs 1. Sie kann auch für andere Brillen, wie Sportbrillen, optische Brillen oder dergleichen, vorgesehen sein. Ferner richtet sich die Erfindung auf ein entsprechendes Montageverfahren zum Montieren der Brille.

Aus dem Stand der Technik ist eine Vielzahl unterschiedlicher Brillen bekannt.

Die DE 44 21 309 C1 offenbart eine gattungsgemäße Scharnierverbindung zwischen einem Brillenbügel und einer Fassung für Brillengläser.

Die US 2016/0299352 A1 offenbart ein Gelenk zwischen einem sich an einen Brillenrahmen anschließenden Endstück und einem Brillenbügel. Aus der US 2010/0321629 A1 ist eine Brillengelenkanordnung mit einem Schwenkzapfen und einem Schwenkzapfensitz bekannt.

Eine aus der US 2016/0223833 A1 bekannte Verbindungsanordnung für Brillenbügel umfasst einen Schwenkzapfen, der über einen Verbindungsabschnitt mit einem Brillenbügel in integraler Verbindung steht.

Die JP 09325303 A offenbart einen Brillenbügel der endseitig einen Zapfen trägt.

Die KR 10-2012-0024327 A offenbart eine Brille mit separaten Brillenbügel-Lagerstiften. Jeder Brillenbügel-Lagerstift trägt fußseitig eine Rastanordnung, die den jeweiligen Brillenbügel-Lagerstift axial an einer zugehörigen Scharnieransatzanordnung an einer Scheibenanordnung fixiert.

Der Erfindung liegt die Aufgabe zugrunde, eine Brille bereitzustellen, die besonders widerstandsfähig bzw. belastbar ist. Dies gilt insbesondere für deren Brillenbügel-Lageranordnungen. Ferner soll die Brille äußerst einfach, insbesondere automatisiert, montierbar bzw. zusammensetzbar sein. Ein entsprechendes Verfahren zum Montieren der Brille soll außerdem geliefert werden. Das Verfahren soll insbesondere äußerst einfach, schnell und automatisiert sein.

Diese Aufgabe wird erfindungsgemäß durch die in den unabhängigen Ansprüchen 1 und 13 angegebenen Merkmale gelöst. Der Kern liegt darin, dass bereits jeder Brillenbügel einen eigenen Lagerstift und mindestens einen Riegelkörper aufweist, der in einer von der Brillenbügel-Montagestellung verschiedenen Schwenkstellung bzw. verschwenkten Stellung, wie insbesondere in einer eingeklappten Brillenbügel-Transportstellung und/oder einer ausgeklappten Brillenbügel-Tragestellung, ein ungewolltes Lösen des Brillenbügels und der Scheibenanordnung voneinander verhindert und bevorzugt gegebenenfalls an der jeweiligen Brillenbügel-Lageranordnung angreift. Der mindestens eine Riegelkörper erlaubt dabei eine relative Schwenkbewegung zwischen der Scheibenanordnung und dem entsprechenden Brillenbügel. Er verhindert bzw. begrenzt vorzugsweise eine relative Bewegung der Scheibenanordnung und des Brillenbügels entlang des Lagerstifts desselben. Die Anforderungen an die mechanische Festigkeit der Brille sind so gewährleistet. Der Lagerstift ersetzt ein separates Lagerteil, wie einen Niet aus Metall oder Kunststoff.

Die Brillenbügel sind vorzugsweise zwischen der Brillenbügel-Transportstellung und der Brillenbügel-Tragestellung mittels der Brillenbügel-Lageranordnungen um eine durch die jeweilige Brillenbügel-Lageranordnung vorgegebene Schwenkachse verschwenkbar.

Die erste und zweite Lageröffnung der jeweiligen Brillenbügel-Lageranordnung fluchten günstigerweise miteinander. Sie sind vorzugsweise zumindest bereichsweise zylindrisch ausgebildet.

Der mindestens eine Riegelkörper ist vorzugsweise stegartig und insbesondere formstabil. Es ist zweckmäßig, wenn die mindestens eine Riegelkörper-Einführöffnung schlitzartig ist.

Die Scharnieransätze sind günstigerweise blockartig bzw. plattenartig ausgeführt. Sie sind vorzugsweise mit einem Brillenrahmen, mindestens einem Brillenrahmenteil oder mindestens einer Brillenscheibe der Scheibenanordnung verbunden bzw. einstückig ausgebildet.

Günstigerweise hat die Brille insgesamt nur drei (Haupt-)Komponenten, nämlich die Scheibenanordnung und die beiden Brillenbügel.

Es ist von Vorteil, wenn die Brille vollständig aus Kunststoff besteht und insbesondere frei von Metall ist. Die Brille ist vorzugsweise bezüglich einer Symmetrieebene symmetrisch.

Es ist von Vorteil, wenn die Scheibenanordnung zwei Brillenscheiben hat. Gemäß einer alternativen Ausgestaltung weist die Scheibenanordnung genau eine einstückige, durchgehende Brillenscheibe auf.

Die Scheibenanordnung ist beispielsweise in einen separaten Brillenrahmen eingesetzt. Alternativ sind die Scheibenanordnung und ein Brillenrahmen einstückig miteinander verbunden. Alternativ ist die Scheibenanordnung rahmenlos. Günstigerweise ist die Scheibenanordnung aus einem Kunststoffmaterial gebildet.

Die Brillenbügel sind bevorzugt konstruktiv identisch aufgebaut. Es ist zweckmäßig, wenn jeder Brillenbügel einteilig ist. Vorzugsweise ist jeder Brillenbügel aus einem Kunststoffmaterial gebildet.

Der mindestens eine Rastvorsprung ist vorzugsweise rampenartig bzw. nasenartig ausgeführt. In montiertem Zustand des sich in der Brillenbügel-Montagestellung befindenden Brillenbügels hinter- bzw. übergreift der mindestens eine Rastvorsprung bevorzugt den benachbarten Scharnieransatz. Günstigerweise ist der mindestens eine Rastvorsprung dann dem Scharnieransatz zugewandt, der die mindestens eine Riegelkörper-Einführöffnung aufweist. Der mindestens eine Rastvorsprung vereinfacht insbesondere die Montage.

Günstigerweise weitet der mindestens eine Rastvorsprung beim Führen des Lagerstifts durch den die mindestens eine Riegelkörper-Einführöffnung aufweisenden Scharnieransatz diesen Scharnieransatz zumindest bereichsweise federnd auf. Dieser Scharnieransatz federt dann in seinen Ausgangszustand zurück.

Der Bügelschlag unterstützt ein Einklappen bzw. Ausklappen des Brillenbügels in dessen benachbarte Endstellung, insbesondere in seine Transportstellung oder Tragestellung.

Vorzugsweise ist der Bügelschlag durch eine entsprechende Geometrieüberlagerung zwischen der Scheibenanordnung und dem jeweiligen Brillenbügel, insbesondere zwischen mindestens einem Scharnieransatz der Scheibenanordnung und dem jeweiligen Brillenbügel-Hauptkörper, gebildet. Es ist zweckmäßig, wenn dazu an mindestens einem Scharnieransatz eine Bügelschlagkurve ausgebildet ist, die zumindest teilweise und/oder zeitweise dem jeweiligen Brillenbügel-Hauptkörper zugewandt ist. Der Brillenbügel-Hauptkörper wiederum weist günstigerweise mindestens einen Anlagevorsprung zum mindestens bereichsweisen und/oder zeitweisen, insbesondere permanenten, insbesondere festen, Anliegen an der Bügelschlagkurve bzw. Abstützen gegenüber derselben während einer relativen Schwenkbewegung zwischen der Scheibenanordnung und dem jeweiligen Brillenbügel auf, wodurch ein Bügelschlag gebildet ist.

Alternativ liegt eine umgekehrte Anordnung vor, sodass an dem jeweiligen Brillenbügel-Hauptkörper eine entsprechende Bügelschlagkurve ausgebildet ist und der mindestens eine zugeordnete Scharnieransatz mindestens einen entsprechenden Anlagevorsprung hat.

Alternativ ist der Bügelschlag beispielsweise durch eine nockenartige, im Querschnitt unrunde Ausgestaltung des Lagerstifts und/oder durch eine entsprechende im Querschnitt unrunde Ausgestaltung der ersten und/oder zweiten Lageröffnung erzielbar.

Weitere vorteilhafte Ausgestaltungen der Erfindung sind in den Unteransprüchen angegeben.

Die Ausgestaltung gemäß dem Unteranspruch 3 ist äußerst belastbar. Insbesondere ist der mindestens eine Riegelkörper besonders belastbar.

Gemäß dem Unteranspruch 4 ist der mindestens eine Riegelkörper beabstandet zu mindestens einem Ende des Lagerstifts des jeweiligen Brillenbügels angeordnet. Es ist zweckmäßig, wenn der mindestens eine Riegelkörper beabstandet zu beiden Enden des Lagerstifts des jeweiligen Brillenbügels angeordnet ist. Er ist vorzugsweise in etwa mittig in Bezug auf eine Länge des Lagerstifts angeordnet.

Die Brille gemäß dem Unteranspruch 5 ist äußerst montagefreundlich. Die mindestens eine Riegelkörper-Einführöffnung unterbricht vorzugsweise einen ansonsten geschlossen Umfangsrand der jeweiligen Lageröffnung bereichsweise, beispielsweise über einen angularen Bereich zwischen 5° und 90°, bevorzugter zwischen 10° und 45°.

Die Ausgestaltung gemäß dem Unteranspruch 6 führt zu einem Scharnierblock, der federnd ist. Dies ist montagefreundlich. Die mindestens eine Riegelkörper-Einführöffnung mündet günstigerweise in Richtung auf die Symmetrieebene bzw. Hauptebene der Brille aus.

Die Ausbildung gemäß dem Unteranspruch 7 verhindert ein ungewolltes Lösen des Brillenbügels von der Scheibenanordnung beim Tragen der Brille durch einen Benutzer. Die Brille ist besonders benutzerfreundlich und mechanisch belastbar.

Der mindestens eine Tragkörper gemäß dem Unteranspruch 10 ist bevorzugt plattenartig. Er schließt sich vorzugsweise unten an den jeweiligen Brillenbügel-Hauptkörper an.

Die Brille gemäß dem Unteranspruch 11 ist äußerst montagefreundlich.

Die Brille gemäß dem Unteranspruch 12 ist besonders einfach montierbar. Insbesondere ist eine, insbesondere vollständige, maschinelle bzw. automatisierte Montierbarkeit möglich. Komplexe Montagebewegungen sind nicht erforderlich. Die Montage ist äußerst kostengünstig durchführbar.

Der Verfahrensschritt gemäß Unteranspruch 14 schließt günstigerweise den Montagevorgang ab.

Die Unteransprüche 2 bis 12 betreffen auch bevorzugte Weiterbildungen des unabhängigen Anspruchs 13.

Nachfolgend wird unter Bezugnahme auf die beigefügte Zeichnung eine bevorzugte Ausführungsform der Erfindung beispielhaft beschrieben. Dabei zeigen:
- Fig. 1: eine perspektivische Ansicht einer erfindungsgemäßen Brille, wobei sich deren Brillenbügel in ihrer vollständig ausgeklappten Tragestellung befinden,
- Fig. 2: die in Fig. 1 gekennzeichnete Einzelheit II der Brille in vergrößertem Maßstab,
- Fig. 3: eine Draufsicht auf die in Fig. 1 gezeigte Brille, wobei nur ein Brillenbügel dargestellt ist,
- Fig. 4: eine Seitenansicht der in Fig. 3 dargestellten Brille, wobei der Brillenbügel von innen gezeigt ist,
- Fig. 5: einen Schnitt entsprechend der in Fig. 3 dargestellten Schnittlinie V-V,
- Fig. 6: einen Schnitt entsprechend der in Fig. 4 dargestellten Schnittlinie VI-VI,

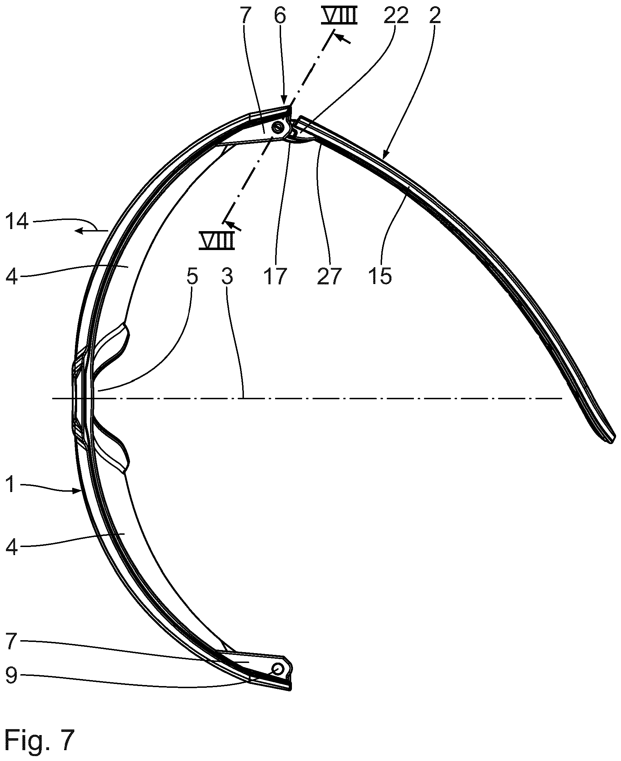

- Fig. 7: eine Draufsicht entsprechend Fig. 3, wobei der Brillenbügel etwas eingeklappt ist,

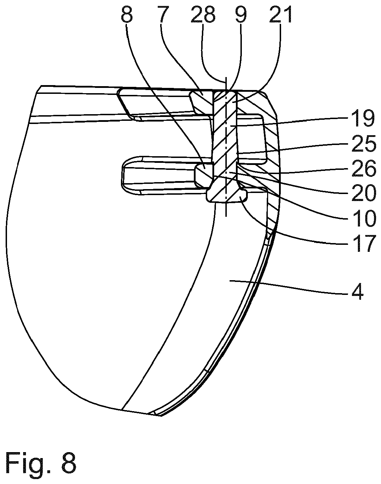

- Fig. 8: einen Schnitt entsprechend der in Fig. 7 dargestellten Schnittlinie VIII-VIII,
- Fig. 9: eine Fig. 3 ähnelnde Seitenansicht der erfindungsgemäßen Brille, wobei der Brillenbügel etwas eingeklappt ist und sich in einer Einführstellung befindet,
- Fig. 10: eine Ansicht entsprechend Fig. 9, wobei sich der Brillenbügel in seiner Montagestellung befindet,
- Fig. 11: eine Fig. 3 ähnelnde Seitenansicht, wobei sich der Brillenbügel in seiner vollständig eingeklappten Transportstellung befindet,
- Fig. 12: einen Schnitt entsprechend der in Fig. 11 dargestellten Schnittlinie XII-XII,
- Fig. 13: einen Schnitt entsprechend der in Fig. 11 gezeigten Schnittlinie XIII-XIII,
- Fig. 14: eine vergrößerte Schnittansicht durch einen Lagerbereich der erfindungsgemäßen Brille zur Veranschaulichung eines Bügelschlags, wobei der Brillenbügel vollständig ausgeklappt ist,
- Fig. 15: eine Schnittansicht entsprechend Fig. 14, wobei der Brillenbügel etwas eingeklappt ist, und
- Fig. 16: eine Schnittansicht entsprechend Fig. 14, wobei der Brillenbügel vollständig eingeklappt ist.

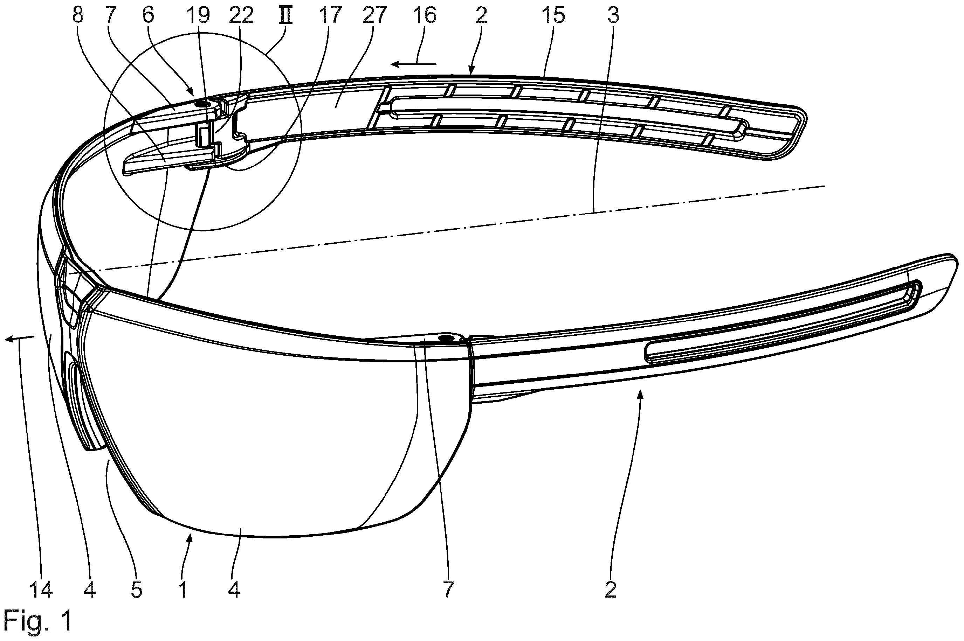

Eine in Fig. 1 in ihrer Gesamtheit dargestellte Brille umfasst eine Scheibenanordnung 1 und zwei an der Scheibenanordnung 1 seitlich angelenkte Brillenbügel 2. Die Brille ist bezüglich einer Symmetrieebene 3 symmetrisch, die mittig durch die Scheibenanordnung 1 läuft.

Die Scheibenanordnung 1 hat zwei Brillenscheiben 4, die nebeneinander angeordnet sind. Zwischen den Brillenscheiben 4 weist die Scheibenanordnung 1 eine Nasenaufnahme 5 zur Aufnahme einer Nase eines Benutzers (nicht dargestellt) auf.

Die Scheibenanordnung 1 umfasst ferner zwei beabstandet zueinander angeordnete, äußere Brillenbügel-Lageranordnungen 6. Die Brillenbügel-Lateranordnungen 6 sind innenseitig an der Scheibenanordnung 1 endseitig angeordnet. Sie sind bevorzugt konstruktiv identisch.

Jede Brillenbügel-Lageranordnung 6 hat einen oberen ersten Scharnieransatz 7 und einen beabstandet zu diesem angeordneten unteren zweiten Scharnieransatz 8. Der erste Scharnieransatz 7 und der zweite Scharnieransatz 8 verlaufen beabstandet übereinander unter Bildung einer Riegelkörper-Aufnahme. Die Scharnieransätze 7, 8 der Brillenbügel-Lageranordnungen 6 springen in Richtung auf die Symmetrieebene 3 vor bzw. aufeinander zu und erstrecken sich parallel zueinander.

In jedem ersten Scharnieransatz 7 ist eine zylindrische erste Lageröffnung 9 ausgebildet, die günstigerweise durchgängig ist.

In jedem zweiten Scharnieransatz 8 ist eine zylindrische zweite Lageröffnung 10 ausgebildet, die mit der ersten Lageröffnung 9 der jeweiligen Brillenbügel-Lageranordnung 6 fluchtet und durchgängig ist. Ferner ist in jedem zweiten Scharnieransatz 8 eine Riegelkörper-Einführöffnung 11 ausgebildet, die sich seitlich bzw. umfangsseitig an die zugehörige zweite Lageröffnung 10 anschließt. Die Riegelkörper-Einführöffnung 11 durchsetzt den zweiten Scharnieransatz 8 über dessen gesamte Dicke bzw. Höhe. Ferner mündet die Riegelkörper-Einführöffnung 11 gegenüberliegend zu der zweiten Lageröffnung 10 nach seitlich außen aus.

Jede Riegelkörper-Einführöffnung 11 ist durch eine erste Einführwand 12 und eine der ersten Einführwand 12 gegenüberliegende zweite Einführwand 13 des zweiten Scharnieransatzes 8 begrenzt. Die Einführwände 12, 13 des jeweiligen zweiten Scharnieransatzes 8 verlaufen beabstandet zueinander. Benachbart zu der jeweiligen zweiten Lageröffnung 10 haben die Einführwände 12, 13 des zweiten Scharnieransatzes 8 einen angularen Abstand, der zwischen 5° und 45° liegt. Die Einführwände 12, 13 des jeweiligen zweiten Scharnieransatzes 8 erstrecken sich von der jeweiligen zweiten Lageröffnung 10 entgegen einer Blickrichtung 14 der Brille. Sie schließen mit der Symmetrieebene 3 einen Winkel ein, der zwischen 15° und 45°, bevorzugter zwischen 20° und 40°, liegt.

Jeder Brillenbügel 2 hat einen Brillenbügel-Hauptkörper 15, der sich längs einer Brillenbügel-Hauptrichtung 16 erstreckt.

Von jedem Brillenbügel-Hauptkörper 15 springt endseitig unten eine Tragplatte 17 vor, an welcher oben eine ebene Gleitfläche 18 ausgebildet ist.

Von jeder Gleitfläche 18 springt senkrecht ein Lagerstift bzw. -zapfen 19 nach oben vor, der benachbart zu der Gleitfläche 18 einen rotationssymmetrischen Lagerfuß 20 und benachbart zu seinem oberen freien Ende einen zylindrischen Lagerkopf 21 aufweist.

Jeder Brillenbügel 2 hat ferner einen stegartigen Riegelkörper 22, der zwischen dem jeweiligen Brillenbügel-Hauptkörper 15 und dem benachbarten Lagerstift 19 verläuft. Jeder Riegelkörper 22 weist senkrecht zu der Brillenbügel-Hauptrichtung 16 eine Höhe H auf, die dem Abstand der ersten Scharnieransätze 7 und zweiten Scharnieransätze 8 zueinander entspricht. Jeder Riegelkörper 22 hat eine obere Riegelfläche 23 und eine untere Riegelfläche 24, die gegenüberliegend zu der zugehörigen oberen Riegelfläche 23 verläuft. Die Riegelflächen 23, 24 von jedem Riegelkörper 22 verlaufen plan und parallel zueinander.

Benachbart zu jedem Riegelkörper 22 springt umfangsseitig von jedem Lagerstift 19 ein Rastvorsprung 25 nach seitlich außen vor, der eine nach unten gerichtete Rastfläche 26 hat. Jeder Rastvorsprung 25 ist zwischen dem Lagerfuß 20 und dem Lagerkopf 21 des zugehörigen Lagerstifts 19 angeordnet. Jeder Rastvorsprung 25 erstreckt sich über einen angularen Bereich von 5° bis 40°. Jeder Rastvorsprung 25 springt im Wesentlichen senkrecht in Bezug auf den benachbarten Riegelkörper 22 von einer Innenseite 27 des Brillenbügels 2 vor.

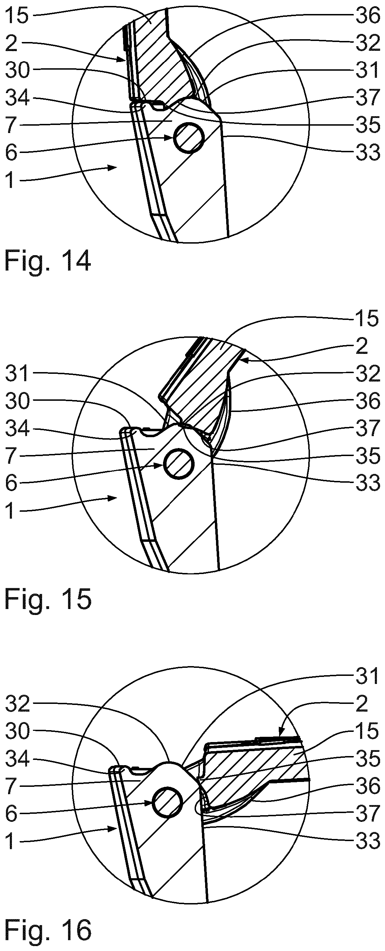

Wie insbesondere Fig. 14 bis 16 zeigen, hat die Scheibenanordnung 1 bei jeder Brillenbügel-Lageranordnung 6 außenseitig einen Schwenkanschlag 30, der als Vorsprung ausgeführt ist und entgegen der Blickrichtung 14 vorspringt. Vorzugsweise ist jeder Schwenkanschlag 30 an dem jeweiligen ersten Scharnieransatz 7 seitlich ausgebildet.

Ferner weist die Scheibenanordnung 1 bei jeder Brillenbügel-Lageranordnung 6 eine freie Bügelschlagkurve 31 auf, die bevorzugt zumindest an dem jeweiligen ersten Scharnieransatz 7 ausgebildet ist und benachbart zu dem Schwenkanschlag 30 endet/beginnt. Jede Bügelschlagkurve 31 ist entgegen der Blickrichtung 14 gewandt. Sie läuft bereichsweise beabstandet um die erste Lageröffnung 9 und ist konvex gekrümmt. Jede Bügelschlagkurve 31 weicht in ihrem Verlauf von einem Kreisbogen ab und hat einen im Wesentlichen zentralen Scheitel 32, der beabstandet zu einem der Symmetrieebene 3 zugewandten inneren Endbereich 33 des jeweiligen ersten Scharnieransatzes 7 und einem der Symmetrieebene 3 abgewandten äußeren Endbereich 34 des jeweiligen ersten Scharnieransatzes 7 bzw. zu dem Schwenkanschlag 30 ausgebildet ist.

Jeder Brillenbügel-Hauptkörper 15 hat an seinem gelenkseitigen Endbereich einen Anlagevorsprung 35. Jeder Anlagevorsprung 35 ist dabei in einem zentralen (Quer)Bereich des Brillenbügel-Hauptkörpers 15 angeordnet. An jeden Anlagevorsprung 35 schließt sich in Richtung auf eine Innenwand 36 des jeweiligen Brillenbügels 2 eine Abstützfläche 37 des Brillenbügel-Hauptkörpers 15 an.

In montiertem Zustand untergreift jede Tragplatte 17 den zweiten Scharnieransatz 8. Jede Gleitfläche 18 liegt unten an dem zweiten Scharnieransatz 8 gleitend an bzw. ist sie benachbart zu dem zweiten Scharnieransatz 8 angeordnet.

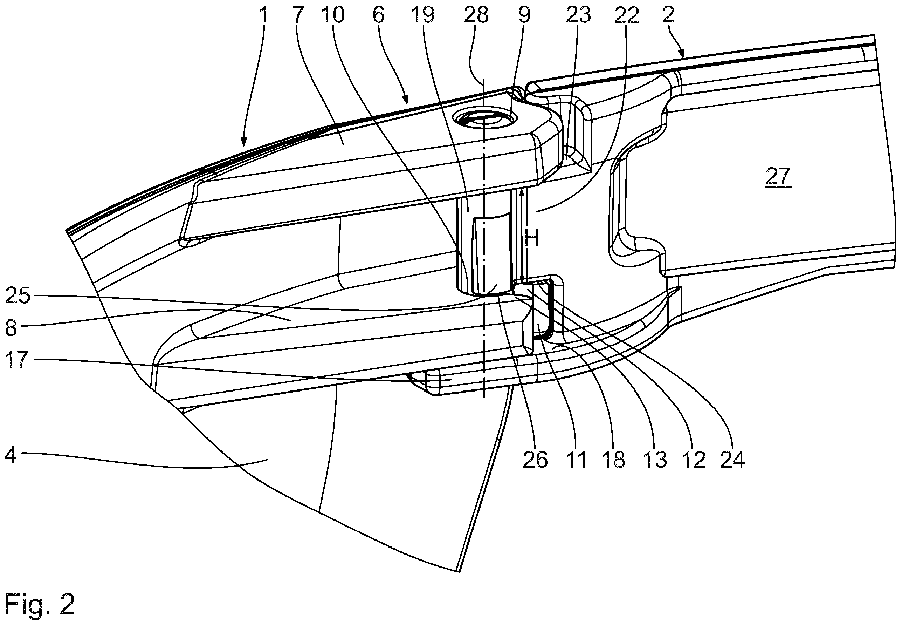

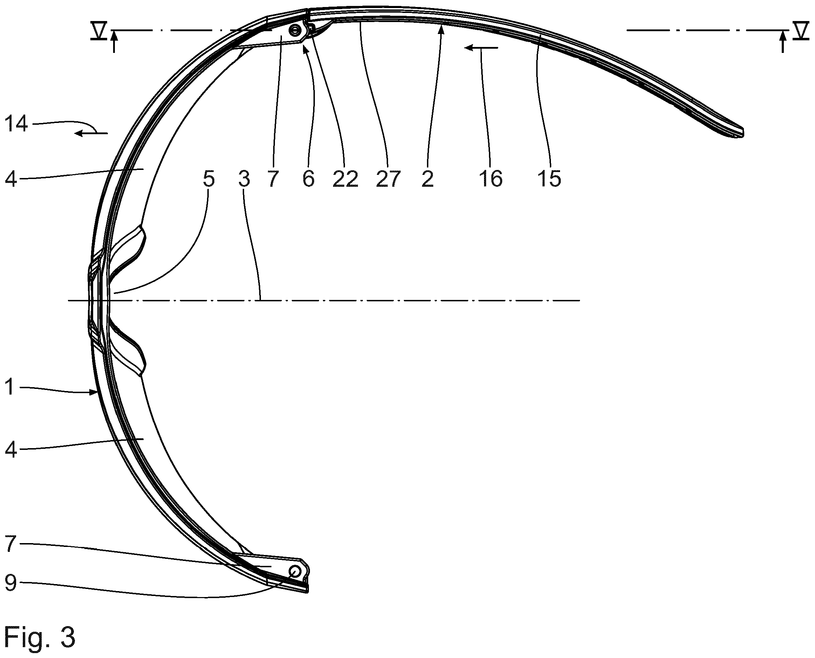

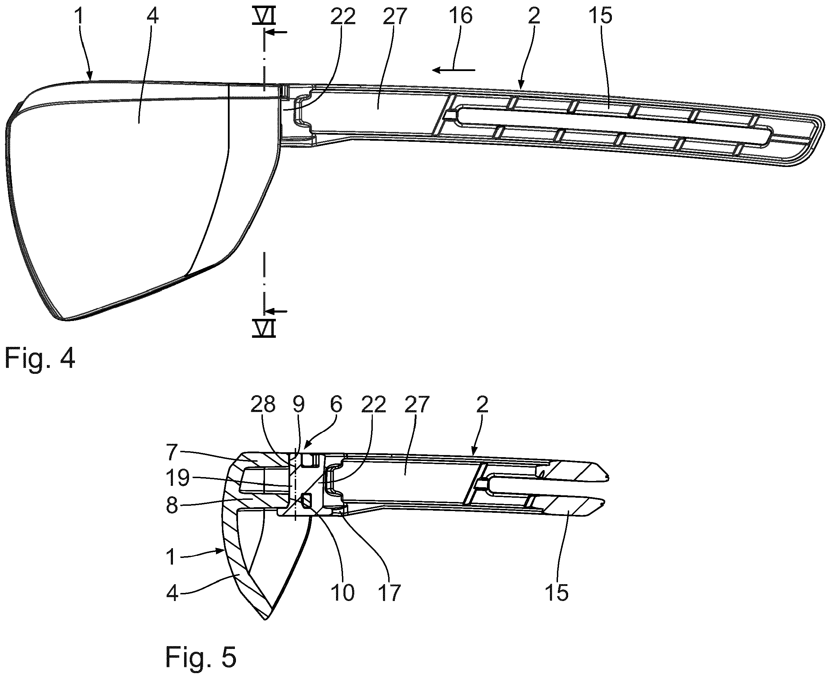

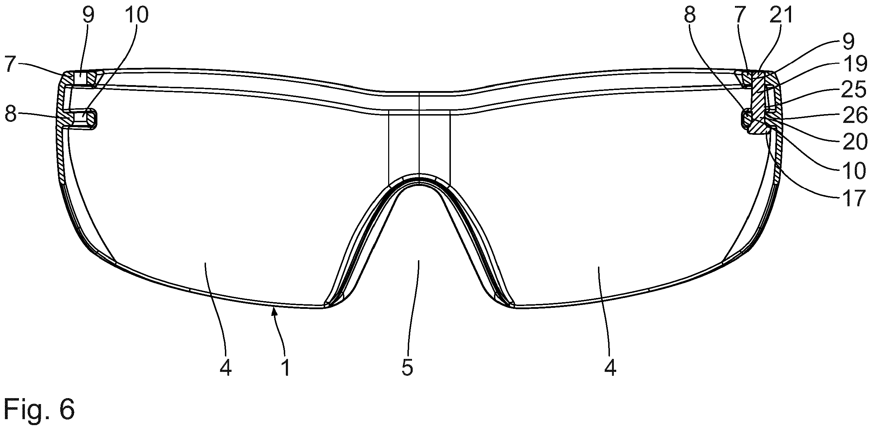

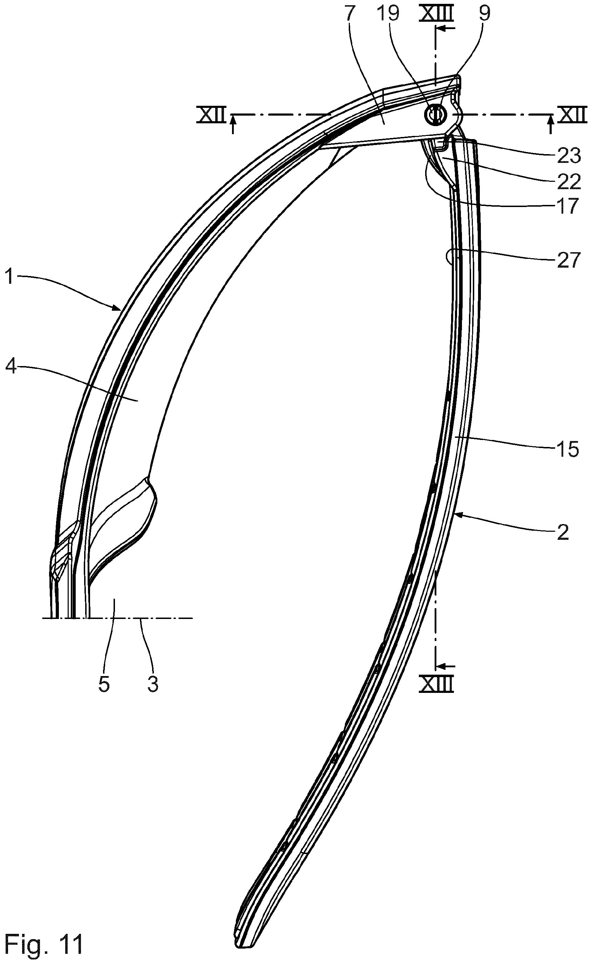

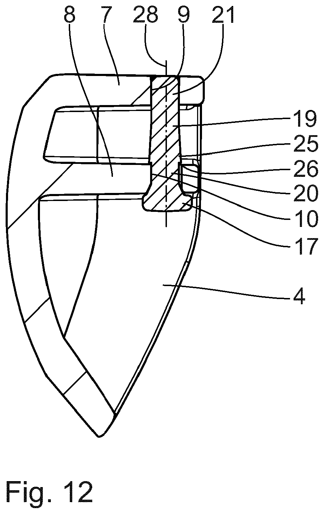

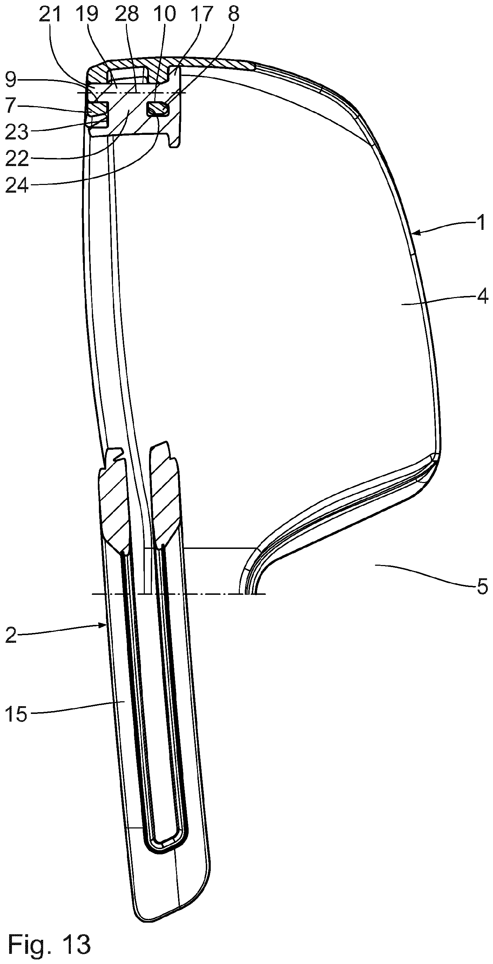

Jeder Lagerkopf 21 greift von unten in die erste Lageröffnung 9 ein, während jeder Lagerfuß 20 in der zweiten Lageröffnung 10 aufgenommen ist. Jeder Lagerstift 19 bzw. jeder Brillenbügel 2 ist so in den lagernden Lageröffnungen 9, 10 um eine jeweilige Schwenkachse 28 unter Bildung eines Schwenkgelenks bzw. -lagers zwischen einer vollständig eingeklappten Transportstellung (Fig. 11 bis 13) und einer vollständig ausgeklappten Tragestellung (Fig. 1 bis 6) beweglich.

Jede obere Riegelfläche 23 ist dem ersten Scharnieransatz 7 zugewandt bzw. liegt sie an dem ersten Scharnieransatz 7 an. Jede untere Riegelfläche 24 ist dem zweiten Scharnieransatz 8 zugewandt bzw. liegt sie an dem zweiten Scharnieransatz 8 an. Jeder Riegelkörper 22 ist so in der jeweiligen Riegelkörper-Aufnahme aufgenommen.

Jede Rastfläche 26 ist dem zweiten Scharnieransatz 8 zugewandt bzw. liegt die Rastfläche 26 an diesem an. Jeder Anlagevorsprung 35 ist stets der Scheibenanordnung 1 zugewandt und ist benachbart zu dieser bzw. zu der zugehörigen Bügelschlagkurve 31 angeordnet.

Wenn sich ein Brillenbügel 2 in seiner vollständig ausgeklappten Tragestellung entsprechend Fig. 14 befindet, liegt der jeweilige Brillenbügel-Hauptkörper 15 an dem Schwenkanschlag 30 an. Der Schwenkanschlag 30 verhindert ein weiteres Verschwenken des jeweiligen Brillenbügels 2 nach seitlich außen. Ferner liegen die Abstützfläche 37 und der Anlagevorsprung 35, insbesondere mit einer Seitenflanke und/oder einem Kopfbereich, zwischen dem Schwenkanschlag 30 und dem Scheitel 32 an der Brillenbügelkurve 31 fest drückend an. Einem Verschwenken des Brillenbügels 2 in seine eingeklappte Transportstellung ist so ein Widerstand entgegengesetzt.

Bei manueller Überwindung dieses Widerstands gleitet der Anlagevorsprung 35 durch Verschwenken des Brillenbügels 2 an der Bügelschlagkurve 31 in Richtung auf den Scheitel 32 entlang. Der Anlagevorsprung 35 erreicht dann durch Verschwenken des Brillenbügels 2 die in Fig. 15 gezeigte Zwischenstellung. Bei dem Scheitel 32 liegt quasi eine maximale Geometrieüberlagerung zwischen der Bügelschlagkurve 31 und dem Anlagevorsprung 35 vor, die in Fig. 15 veranschaulicht ist.

Vor Erreichen des Scheitels 32 kehrt der Brillenbügel 2 automatisch stets in seine vollständig ausgeklappte Tragestellung zurück, was auf den vorherrschenden Druck zwischen der Bügelschlagkurve 31 und dem Anlagevorsprung 35 zurückzuführen ist. Der Anlagevorsprung 35 gleitet dabei an der Bügelschlagkurve 31 entlang bzw. zurück, was zu der entsprechenden Schwenkbewegung des Brillenbügels 2 führt.

Nachdem der Anlagevorsprung den Scheitel 32 passiert hat, bewegt sich der Brillenbügel 2 automatisch in seine vollständig eingeklappte Transportstellung (Fig. 16), was wiederum auf den vorherrschenden Druck zwischen der Bügelschlagkurve 31 und dem Anlagevorsprung 35 zurückzuführen ist. Der Anlagevorsprung 35 gleitet dabei an der Bügelschlagkurve 31 entlang, was zu der entsprechenden Schwenkbewegung des Brillenbügels 2 führt.

Bei dem Scheitel 32 liegt so ein Totpunkt des Bügelschlags vor. Der Brillenbügel 2 wird in keine Endstellung gezwängt.

In der vollständig eingeklappten Transportstellung befindet sich der Anlagevorsprung 35 benachbart zu dem inneren Endbereich 33 an der Bügelschlagkurve 31. Analoges gilt für ein umgekehrtes Verschwenken des Brillenbügels 2.

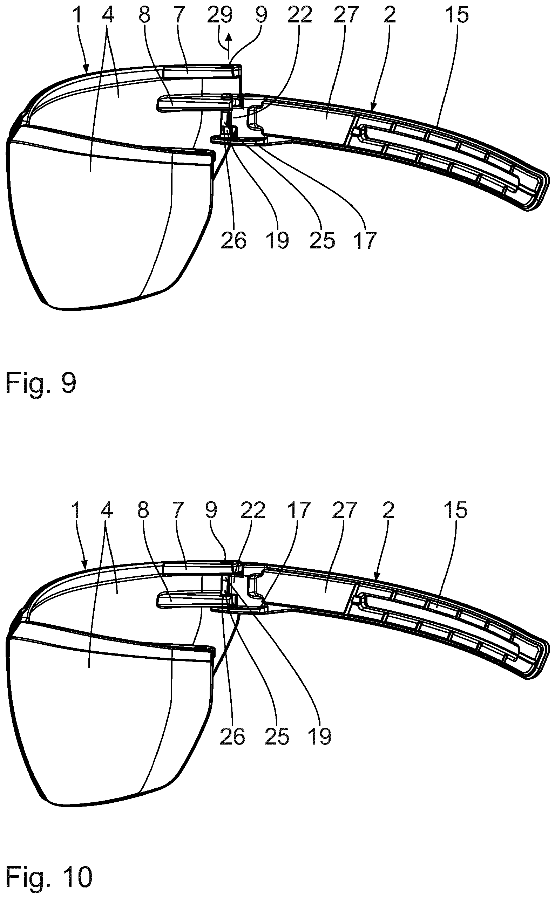

Nachfolgend wird die Montage eines Brillenbügels 2 beschrieben. Wie Fig. 9 zeigt, wird zunächst der Lagerstift 19 des zu montierenden Brillenbügels 2 in einer Einführrichtung bzw. Montagerichtung 29 mit seinem Lagerkopf 21 in die zweite Lageröffnung 10 von unten eingeführt.

Anschließend werden die Scheibenanordnung 1 und der Brillenbügel 2 derart um die Schwenkachse 28 zueinander ausgerichtet bzw. verschwenkt, dass die Riegelkörper-Einführöffnung 11 und der Riegelkörper 22 übereinander liegen. Alternativ erfolgt bereits die beschriebene Ausrichtung der Scheibenanordnung 1 und des Brillenbügels 2 zueinander zeitlich vor der Einführung des Lagerstifts 19 in die zweite Lageröffnung 10.

Der Lagerstift 19 wird anschließend weiter axial längs der Einführrichtung 29 in Richtung auf die erste Lageröffnung 9 eingeführt, wobei der Lagerstift 19 die zweite Lageröffnung 10 von unten durchtritt und der Riegelkörper 22 die Riegelkörper-Einführöffnung 11 von unten durchsetzt. Die Einführwände 12, 13 sind dabei benachbart zu dem Riegelkörper 22 angeordnet bzw. diesem zugewandt. Der Rastvorsprung 25 greift dabei innen an dem zweiten Scharnieransatz 8 an und weitet diesen federnd auf. Dabei werden die Einführwände 12, 13 voneinander beabstandet.

Sobald der Rastvorsprung 25 den zweiten Scharnieransatz 8 vollständig durchsetzt hat, federt bzw. schnappt der zweite Scharnieransatz 8 in seine ursprüngliche Stellung zurück, so dass der Rastvorsprung 25 mit seiner Rastfläche 26 den zweiten Scharnieransatz 8 übergreift. Die Tragplatte 17 verhindert ein zu weites Einführen des Lagerstifts 19 in die Lageranordnung 6. Sie bildet einen Einführanschlag. Der Lagerstift 19 ist so axial in der Brillenbügel-Lageranordnung 6 festgelegt. Der Lagerkopf 21 greift in die erste Lageröffnung 9 ein (siehe Fig. 10). Der Riegelkörper 22 ist hier bislang unwirksam. Der Brillenbügel 2 befindet sich in der Brillenbügel-Montagestellung.

Anschließend wird der Brillenbügel 2 um die Schwenkachse 28 in seine ausgeklappte Tragestellung (Fig. 1 bis 6) oder eingeklappte Transportstellung (Fig. 11 bis 13) verschwenkt, wobei der Bügelschlag wirksam ist. Der Riegelkörper 22 wird so in die Riegelkörper-Aufnahme zwischen den Scharnieransätzen 7, 8 eingeschwenkt und verhindert ein ungewolltes Lösen der Scheibenanordnung 1 und des Brillenbügels 2 voneinander. Er ist jetzt wirksam und verhindert bzw. begrenzt eine Verschiebung des Brillenbügels 2 und der Scheibenanordnung 1 längs des Lagerstifts 19. Der Rastvorsprung 25 ist nun im Wesentlichen unnötig. Der andere Brillenbügel 2 wird analog montiert.

## Patentansprüche

1. Brille, insbesondere Arbeitsschutzbrille,
a) mit einer Scheibenanordnung (1) mit zwei seitlichen Brillenbügel-Lageranordnungen (6), wobei jede der Brillenbügel-Lageranordnungen (6) aufweist
i) einen ersten Scharnieransatz (7) mit einer ersten Lageröffnung (9),
ii) einen zweiten Scharnieransatz (8) mit einer der ersten Lageröffnung (9) gegenüberliegenden zweiten Lageröffnung (10), und
iii) mindestens eine in dem ersten Scharnieransatz (7) oder zweiten Scharnieransatz (8) ausgebildete Riegelkörper-Einführöffnung (11), und
b) mit zwei Brillenbügeln (2), die jeweils aufweisen
i) einen Brillenbügel-Hauptkörper (15),
ii) einen mit dem jeweiligen Brillenbügel-Hauptkörper (15) einstückig verbundenen Lagerstift (19), der
- in montiertem Zustand mit der ersten Lageröffnung (9) und der zweiten Lageröffnung (10) der jeweiligen Brillenbügel-Lageranordnung (6) in Schwenkverbindung steht, und
iii) mindestens einen Riegelkörper (22), der
- in montiertem Zustand zwischen den Scharnieransätzen (7, 8) der jeweiligen Brillenbügel-Lageranordnung (6) angeordnet ist, und
- in einer von einer Brillenbügel-Montagestellung verschiedenen Schwenkstellung des jeweiligen Brillenbügels (2) diesen Brillenbügel (2) und die Scheibenanordnung (1) riegelnd zusammenhält, und
c) mit einem Bügelschlag zum Bewegen des jeweiligen Brillenbügels (2) in seine benachbarte Endstellung,
**dadurch gekennzeichnet, dass**
d) der Lagerstift (19) mindestens einen Rastvorsprung (25) mit mindestens einer Rastfläche (26) aufweist, die entgegen einer Brillenbügel-Montagerichtung (29) orientiert ist und in montiertem Zustand des sich in der Brillenbügel-Montagestellung befindenden Brillenbügels (2) dem benachbarten Scharnieransatz (8) zum Verhindern einer Demontage zugewandt ist.

2. Brille nach Anspruch 1, **dadurch gekennzeichnet, dass** die mindestens eine Rastfläche (26) in montiertem Zustand des sich in der Brillenbügel-Montagestellung befindenden Brillenbügels (2) den benachbarten Scharnieransatz (8) zum Verhindern einer Demontage rastend übergreift.

3. Brille nach Anspruch 1 oder 2, **dadurch gekennzeichnet, dass** sich der mindestens eine Riegelkörper (22) an den Lagerstift (19) des jeweiligen Brillenbügels (2) anschließt.

4. Brille nach einem der vorherigen Ansprüche, **dadurch gekennzeichnet, dass** der mindestens eine Riegelkörper (22) beabstandet zu mindestens einem Ende des Lagerstifts (19) des jeweiligen Brillenbügels (2) angeordnet ist.

5. Brille nach einem der vorherigen Ansprüche, **dadurch gekennzeichnet, dass** sich die mindestens eine Riegelkörper-Einführöffnung (11) seitlich an die Lageröffnung (10) des jeweiligen Scharnieransatzes (8) anschließt.

6. Brille nach einem der vorherigen Ansprüche, **dadurch gekennzeichnet, dass** die mindestens eine Riegelkörper-Einführöffnung (11) gegenüberliegend zu der zugehörigen Lageröffnung (10) nach seitlich außen offen ist.

7. Brille nach einem der vorherigen Ansprüche, **dadurch gekennzeichnet, dass** die mindestens eine Riegelkörper-Einführöffnung (11) gegenüber einer Brillenbügel-Tragestellung in Schwenkrichtung versetzt ist.

8. Brille nach einem der vorherigen Ansprüche, **dadurch gekennzeichnet, dass** der Bügelschlag durch mindestens einen Anlagevorsprung (35) an dem Brillenbügel (2) und/oder an der Scheibenanordnung (1) und eine dem mindestens einen Anlagevorsprung (35) zugeordnete Bügelschlagkurve (31) an der anderen Komponente (1, 2) gebildet ist.

9. Brille nach einem vorherigen Ansprüche, **dadurch gekennzeichnet, dass** die mindestens eine Riegelkörper-Einführöffnung (11) gegenüber einem Totpunkt des Bügelschlags in Schwenkrichtung versetzt ist.

10. Brille nach einem der vorherigen Ansprüche, **dadurch gekennzeichnet, dass** jeder Lagerstift (19) über mindestens einen Tragkörper (17) mit dem jeweiligen Brillenbügel-Hauptkörper (15) verbunden ist.

11. Brille nach Anspruch 10, **dadurch gekennzeichnet, dass** der mindestens eine Tragkörper (17) einen Einführanschlag für den Lagerstift (19) bei Einführung desselben in die jeweilige Brillenbügel-Lageranordnung (6) bildet.

12. Brille nach einem der vorherigen Ansprüche, **dadurch gekennzeichnet, dass** jeder Brillenbügel (2) durch eine lineare Einführbewegung montierbar ist.

13. Verfahren zum Montieren einer Brille nach einem der vorherigen Ansprüche, umfassend die Schritte
- Ausrichten des mindestens einen Riegelkörpers (22) des jeweiligen Brillenbügels (2) und der zugehörigen mindestens einen Riegelkörper-Einführöffnung (11) der Scheibenanordnung (1) in Schwenkrichtung zueinander,
- Führen des jeweiligen Lagerstifts (19) durch den zugehörigen, die Riegelkörper-Einführöffnung (11) aufweisenden Scharnieransatz (8) unter gleichzeitiger Führung des mindestens einen Riegelkörpers (22) durch die mindestens eine Riegelkörper-Einführöffnung (11), und
- zumindest bereichsweise federndes Aufweiten des mindestens eine Riegelkörper-Einführöffnung (11) aufweisenden Scharnieransatzes (8) beim Führen des Lagerstifts (19) durch den die mindestens eine Riegelkörper-Einführöffnung (11) aufweisenden Scharnieransatz (8) durch mindestens einen Rastvorsprung (25) mit mindestens einer Rastfläche (26) des Lagerstifts (19), die entgegen einer Brillenbügel-Montagerichtung (29) orientiert ist und in montiertem Zustand des sich in der Brillenbügel-Montagestellung befindenden Brillenbügels (2) dem benachbarten Scharnieransatz (8) zum Verhindern einer Demontage zugewandt ist,
- wobei die Brille einen Bügelschlag zum Bewegen des jeweiligen Brillenbügels (2) in seine benachbarte Endstellung aufweist.

14. Verfahren nach Anspruch 13, **gekennzeichnet durch** Verschwenken des Brillenbügels (2) und des mindestens einen Riegelkörpers (22) zueinander zum Zusammenhalten der Scheibenanordnung (1) und des Brillenbügels (2).

## Claims

1. A pair of spectacles, in particular industrial safety spectacles,
a) comprising a lens arrangement (1) having two lateral temple arm bearing arrangements (6), wherein each of the temple arm bearing arrangements (6) has
i) a first hinge lug (7) having a first bearing opening (9),
ii) a second hinge lug (8) having a second bearing opening (10) situated opposite the first bearing opening (9), and
iii) at least one locking member insertion opening (11) configured in the first hinge lug (7) or second hinge lug (8), and
b) comprising two temple arms (2), which respectively have
i) a temple arm main body (15),
ii) a bearing pin (19) integrally connected to the respective temple arm main body (15), which bearing pin (19)
- in the assembled state, is pivotably connected to the first bearing opening (9) and the second bearing opening (10) of the respective temple arm bearing arrangement (6), and
iii) at least one locking member (22), which
- in the assembled state, is arranged between the hinge lugs (7, 8) of the respective temple arm bearing arrangement (6), and
- in a pivot position of the respective temple arm (2) that is different from a temple arem assembly position, holds together this temple arm (2) and the lens arrangement (1) in a locking manner, and
c) comprising a temple arm stroke for moving the respective temple arm (2) into its adjacent end position,
**characterized in that**
d) the bearing pin (19) has at least one latching projection (25) having at least one latching surface (26) which latter is oriented counter to a temple arm assembly direction (29) and, in an assembled state of the temple arm (2) located in the temple arm assembly position, is facing toward the adjacent hinge lug (8) in order to prevent disassembly.

2. The spectacles as claimed in claim 1, **characterized in that** the at least one latching surface (26), in the assembled state of the temple arm (2) located in the temple arm assembly position, latchingly overgrips the adjacent hinge lug (8) in order to prevent disassembly.

3. The spectacles as claimed in claim 1 or 2, **characterized in that** the at least one locking member (22) adjoins the bearing pin (19) of the respective temple arm (2).

4. The spectacles as claimed in one of the previous claims, **characterized in that** the at least one locking member (22) is spaced from at least one end of the bearing pin (19) of the respective temple arm (2).

5. The spectacles as claimed in one of the previous claims, **characterized in that** the at least one locking member insertion opening (11) laterally adjoins the bearing opening (10) of the respective hinge lug (8).

6. The spectacles as claimed in one of the previous claims, **characterized in that** the at least one locking member insertion opening (11) is open laterally outwardly opposite to the associated bearing opening (10).

7. The spectacles as claimed in one of the previous claims, **characterized in that** the at least one locking member insertion opening (11) is offset from a temple arm wearing position in a direction of pivot.

8. The spectacles as claimed in one of the previous claims, **characterized in that** the temple arm stroke is formed by at least one abutment projection (35) on the temple arm (2) and/or on the lens arrangement (1), and a temple arm stroke cam (31), assigned to the at least one abutment projection (35), on the other component (1, 2).

9. The spectacles as claimed in one of the previous claims, **characterized in that** the at least one locking member insertion opening (11) is offset from a dead center of the temple arm stroke in a direction of pivot.

10. The spectacles as claimed in one of the previous claims, **characterized in that** each bearing pin (19) is connected to the respective temple arm main body (15) via at least one supporting body (17).

11. The spectacles as claimed in claim 10, **characterized in that** the at least one supporting body (17) forms an insertion stop for the bearing pin (19) upon introduction of the same into the respective temple arm bearing arrangement (6).

12. The spectacles as claimed in one of the previous claims, **characterized in that** each temple arm (2) is assemblable by a linear insertion movement.

13. A method for assembling spectacles as claimed in one of the previous claims, comprising the steps:
- mutual orientation of the at least one locking member (22) of the respective temple arm (2) and of the associated at least one locking member insertion opening (11) of the lens arrangement (1) in the direction of pivot, and
- guiding of the respective bearing pin (19) through the associated hinge lug (8) comprising the locking member insertion opening (11), with simultaneous guidance of the at least one locking member (22) through the at least one locking member insertion opening (11), and
- at least in some regions resilient expansion of the hinge lug (8) having at least one locking member insertion opening (11) when the bearing pin (19) is guided through the hinge lug (8) having the at least one locking member insertion opening (11) by at least one latching projection (25) having at least one latching surface (26) of the bearing pin (19), which latching surface (26) is oriented counter to a temple arm assembly direction (29) and, in an assembled state of the temple arm (2) located in the temple arm assembly position, is facing toward the adjacent hinge lug (8) in order to prevent disassembly,
- wherein the spectacles have a temple arm stroke for moving the respective temple arm (2) into its adjacent end position.

14. The method as claimed in claim 13, **characterized by** a pivoting of the temple arm (2) and of the at least one locking member (22) relative to each other in order to hold together the lens arrangement (1) and the temple arm (2).

## Revendications

1. Lunettes, en particulier des lunettes de protection pour le travail,
a) ayant un ensemble de verres (1) avec deux ensembles de palier de branches de lunettes (6) latéraux, chacun des ensembles de palier de branches de lunettes (6) comprenant
i) une première patte de charnière (7) avec une première ouverture de palier (9),
ii) une deuxième patte de charnière (8) avec une deuxième ouverture de palier (10) opposée à la première ouverture de palier (9), et
iii) au moins une ouverture d'insertion de corps de verrouillage (11) formée dans la première patte de charnière (7) ou la deuxième patte de charnière (8), et
b) avec deux branches de lunettes (2), qui présentent chacune
i) un corps principal de branche de lunettes (15),
ii) une tige de palier (19) reliée d'un seul tenant au corps principal de branche de lunettes (15) respectif, qui
- à l'état monté, est en liaison pivotante avec la première ouverture de palier (9) et la deuxième ouverture de palier (10) de l'ensemble de palier de branche de lunettes (6) respectif, et
iii) au moins un corps de verrouillage (22) qui
- à l'état monté, est agencé entre les pattes de charnière (7, 8) de l'ensemble de palier de branche de lunettes (6) respectif, et
- dans une position de pivotement de la branche de lunettes (2) respective, différente d'une position de montage de branche de lunettes, cette branche de lunettes (2) et l'ensemble de verres (1) sont maintenus ensemble par verrouillage, et
c) avec un coup de branche pour déplacer la branche de lunettes (2) respective dans sa position finale voisine,
**caractérisées en ce que**
d) la tige de palier (19) présente au moins une saillie d'encliquetage (25) avec au moins une surface d'encliquetage (26), qui est orientée à l'opposé d'une direction de montage de branche de lunettes (29) et qui, à l'état monté de la branche de lunettes (2) se trouvant dans la position de montage de branche de lunettes, est tournée vers la patte de charnière (8) voisine pour empêcher un démontage.

2. Lunettes selon la revendication 1, **caractérisées en ce qu'à** l'état monté de la branche de lunettes (2) se trouvant dans la position de montage de la branche de lunettes, ladite au moins une surface d'encliquetage (26) recouvre par encliquetage la patte de charnière (8) voisine pour empêcher un démontage.

3. Lunettes selon la revendication 1 ou 2, **caractérisées en ce que** ledit au moins un corps de verrouillage (22) se raccorde à la tige de palier (19) de la branche de lunettes (2) respective.

4. Lunettes selon l'une quelconque des revendications précédentes, **caractérisées en ce que** ledit au moins un corps de verrouillage (22) est disposé à distance d'au moins une extrémité de la tige de palier (19) de la branche de lunettes (2) respective.

5. Lunettes selon l'une quelconque des revendications précédentes, **caractérisées en ce que** l'au moins une ouverture d'insertion de corps de verrouillage (11) se raccorde latéralement à l'ouverture de palier (10) de la patte de charnière (8) respective.

6. Lunettes selon l'une quelconque des revendications précédentes, **caractérisées en ce que** l'au moins une ouverture d'insertion de corps de verrouillage (11) est ouverte latéralement vers l'extérieur en face de l'ouverture de palier (10) associée.

7. Lunettes selon l'une quelconque des revendications précédentes, **caractérisées en ce que** l'au moins une ouverture d'insertion de corps de verrouillage (11) est décalée dans la direction de pivotement par rapport à une position de port de branche de lunettes.

8. Lunettes selon l'une quelconque des revendications précédentes, **caractérisées en ce que** le coup de branche est formé par au moins une saillie d'appui (35) sur la branche de lunettes (2) et/ou sur l'ensemble de verres (1) et une courbe de coup de branche (31) associée à ladite au moins une saillie d'appui (35) sur l'autre composant (1, 2).

9. Lunettes selon l'une quelconque des revendications précédentes, **caractérisées en ce que** l'au moins une ouverture d'insertion de corps de verrouillage (11) est décalée dans la direction de pivotement par rapport à un point mort du coup de branche.

10. Lunettes selon l'une quelconque des revendications précédentes, **caractérisées en ce que** chaque tige de palier (19) est reliée au corps principal de branche de lunettes (15) correspondant par l'intermédiaire d'au moins un corps de support (17).

11. Lunettes selon la revendication 10, **caractérisées en ce que** ledit au moins un corps de support (17) forme une butée d'insertion pour la tige de palier (19) lors de l'insertion de celle-ci dans l'ensemble de palier de branche de lunettes (6) respectif.

12. Lunettes selon l'une quelconque des revendications précédentes, **caractérisées en ce que** chaque branche de lunettes (2) peut être montée par un mouvement d'insertion linéaire.

13. Procédé de montage d'une paire de lunettes selon l'une quelconque des revendications précédentes, comprenant les étapes consistant à
- aligner l'un par rapport à l'autre, dans la direction de pivotement, l'au moins un corps de verrouillage (22) de la branche de lunettes (2) respective et l'au moins une ouverture d'insertion de corps de verrouillage (11) correspondante de l'ensemble de verres (1),
- guider la tige de palier (19) respective à travers la patte de charnière (8) correspondante, présentant l'ouverture d'insertion de corps de verrouillage (11), en guidant simultanément ledit au moins un corps de verrouillage (22) à travers ladite au moins une ouverture d'insertion de corps de verrouillage (11), et
- élargier élastique au moins par zones de la patte de charnière (8) présentant au moins une ouverture d'insertion de corps de verrouillage (11) lors du guidage de la tige de palier (19) à travers la patte de charnière (8) présentant au moins une ouverture d'insertion de corps de verrouillage (11) par au moins une saillie d'encliquetage (25) avec au moins une surface d'encliquetage (26) de la tige de palier (19), qui est orientée à l'opposé d'une direction de montage de branche de lunettes (29) et qui, à l'état monté de la branche de lunettes (2) se trouvant dans la position de montage de branche de lunettes, est tournée vers la patte de charnière (8) voisine pour empêcher un démontage,
- dans lequel les lunettes présentent un coup de branche pour déplacer la branche de lunettes (2) respective dans sa position finale voisine.

14. Procédé selon la revendication 13, **caractérisé par** le pivotement de la branche de lunettes (2) et de l'au moins un corps de verrouillage (22) l'un par rapport à l'autre pour maintenir ensemble l'ensemble de verres (1) et la branche de lunettes (2).
